# EUROPÄISCHE PATENTSCHRIFT

(11) **EP 0 403 896 B1**
(45) Veröffentlichungstag und Bekanntmachung des Hinweises auf die Patenterteilung: **17.01.1996**
(21) Anmeldenummer: 90110920.7
(22) Anmeldetag: 09.06.1990
(51) Int. Cl.: G02B 6/28

(54) **Verfahren zur Herstellung eines Sternkopplers aus Polymer-Lichtwellenleitern**
Method for fabrication of a star coupler from polymeric optical fibres
Procédé pour la fabrication d'un coupleur étoile de fibres optiques en polymère

(30) Priorität: 13.06.1989 DE 3919263
(43) Veröffentlichungstag der Anmeldung: 27.12.1990
(73) Patentinhaber: HOECHST AKTIENGESELLSCHAFT, D-65926 Frankfurt am Main (DE)
(72) Erfinder: Coutandin, Jochen, Dr., D-6536 Langenlonsheim (DE); Groh, Werner, Dr., D-6302 Lich (DE); Herbrechtsmeier, Peter, Dr., D-6240 Königstein am Taunus (DE); Theis, Jürgen, Dr., D-6000 Frankfurt am Main (DE)

(56) Entgegenhaltungen:
- EP-A- 0 315 874
- GB-A- 633 082
- US-A- 3 026 569
- US-A- 4 687 284
- APPLIED OPTICS, Bd. 25, Nr. 19, 1. Oktober 1986, NEW YORK US, Seiten 3443-3447 ; K. IMOTO: 'Plastic optical fiber star coupler'

## Beschreibung

Die Erfindung bezieht sich auf ein Verfahren zur Herstellung eines mechanisch robusten Sternkopplers für Polymer-Lichtwellenleiter-Systeme.

Ein Sternkoppler ist ein optisches Bauteil, das die Lichtleitung in einer Eingangsfaser auf M Ausgangsfasern verteilt. Derartige Bauteile werden in passiven Lichtwellenleiternetzen als Lichtleistungsverteiler eingesetzt. Die gleichmäßige Verteilung geschieht im sogenannten Mischbereich. Im wesentlichen gibt es bisher 2 Methoden zur Herstellung von Sternkopplern für Polymer-Lichtwellenleiter-Systeme:
1.) "Biconical-Taper-Verfahren" (BT-Verfahren; vgl. K. Imoto et al., Appl. Opt., Bd. 25, Nr. 19, S.3443 (1986)
2.) "Mixing-Rod-Verfahren" (MR-Verfahren; vgl. R.D. Codd, SAE/IEEE, International Congress on Transportation Electronics (1984))

Beim BT-Verfahren werden mehrere Lichtwellenleiter (Glas oder Polymer) gebündelt und unter Hitzeeinwirkung verstreckt. Dabei bildet sich eine Taille mit bikonischem Verlauf aus, woraus sich der Name des Verfahrens ableitet. Anschließend werden die verstreckten Fasern in der heißen Zone verdrillt, so daß die optischen Mäntel der LWL in der Taille miteinander verschmolzen werden.

Die Ausbreitungswinkel von Lichtstrahlen, die in einer Eingangsfaser geführt werden, werden im Verjüngungsbereich immer steiler, bis der Kern diese Strahlen nicht mehr führt. Beginnend mit den Moden höchster Ordnung gehen mehr und mehr Kernmoden in Mantelmoden über. Im Verschmelzungsbereich durchmischen sich die Mantelmoden der unterschiedlichen Fasern. Wenn sich die Fasern danach wieder trennen, teilen sich die im Mantel geführten Lichtstrahlen auf alle Ausgangsfasern auf und werden mit zunehmender Faserdicke kontinuierlich in Kernmoden zurückgewandelt.
Mit diesem Verfahren hergestellte Sternkoppler sind relativ verlustarm, zeigen aber eine starke Modenabhängigkeit*,* die bei einem Systemaufbau bestehend aus LWL, Steckverbindungen und Koppler durch die Annahme einer überdimensionalen Systemreserve berücksichtigt wird.
Ein weiterer Nachteil eines BT-Kopplers ist seine mechanische Instabilität im Verjüngungsbereich, so daß ein Einsatz beispielsweise im Automobil nicht möglich wäre. Die Herstellung ist außerdem aufwendig und teuer, da das Verfahren nur eine Einzelstückfertigung erlaubt mit allen daraus resultierenden Nachteilen, wie beispielsweise die mangelhafte Reproduzierbarkeit der optischen Parameter.

Beim MR-Verfahren werden Polymer-Lichtwellenleiter mit ihren polierten Enden an die Stirnflächen von transparenten Stäben oder Plättchen geklebt. Die Plättchen bzw. Stäbe dienen dabei als optische Mischer.

Dieses Verfahren ist in der Herstellung sehr aufwendig und teuer und daher für eine Serienfertigung nicht geeignet. Die optischen Verluste sind hoch.

In der EP-A-0 315 874 wird ein Verfahren zur Herstellung eines optischen Kopplers beschrieben, wobei Polymer-Lichtwellenleiter durch die Schrumpfkraft eines Kunststoff-Schrumpfschlauches bei einer Temperatur von 50 bis 330°C gebündelt werden. Der Schrumpfschlauch dient außerdem als cladding-Ersatz der gebündelten Kernfasern. Von Nachteil bei dieser Methode ist, daß die verschmolzenen Kernfasern nur unzureichend von dem Schrumpfschlauch (cladding) umschlossen werden.

Die Aufgabe bestand nun darin, ein Verfahren zu finden, nach welchem man einen mechanisch robusten Sternkoppler einfach und kostengünstig herstellen kann. Das Verfahren sollte außerdem Koppler mit niedrigen Einfügeverlusten und geringen Schwankungen zwischen den einzelnen Ausgangsfasern liefern.

Es wurde gefunden, daß man die oben genannten Anforderungen erfüllen kann, wenn man Polymer-Lichtwellenleiter in einer Vorrichtung unter Druck und Zuführung von Wärme miteinander verschmilzt.

Für das Verfahren werden 2 bis 10³, vorzugsweise 2 bis 128, Polymer-Lichtwellenleiter, deren optischer Mantel in dem zu verschmelzenden Bereich vorher entfernt wurde, um den Lichtübertritt zwischen den einzelnen Fasern zu ermöglichen, in eine Rinne im Unterteil einer Vorrichtung eingelegt. Die Innenwände dieser Vorrichtung sind zweckmäßigerweise poliert, um Oberflächenrauhigkeiten, die zu starken Lichtverlusten führen können, zu verringern.

Mit einem Stempel werden die Lichtwellenleiter bei einer Temperatur deutlich über der Glastemperatur des Lichtwellenleitermaterials unter Druck zu einem homogenen Mischbereich verschmolzen. Danach werden Unterteil und Stempel unter Beibehaltung des Druckes unter die Glastemperatur abgekühlt und der Koppler aus der Rinne entnommen. Die Öffnung der Rinne ist konisch gestaltet, so daß beim Verpressen der Übergang vom Mischbereich zu den Einzelfasern kontinuierlich verläuft, da eine abrupte Querschnittawandlung zu einem relativ scharfen Knick in den Fasern führt, der mit hohen optischen Verlusten verbunden ist.

Der Mischbereich, der aus abisolierten Polymer-Lichtwellenleitern besteht, wird optisch isoliert mit einem Material, dessen Brechungsindex niedriger als der des Lichtwellenleitermaterials sein muß. Diese optische Isolation kann anschließend an das Verschmelzen durch einen transparenten Lack erfolgen.

Die geometrischen Maße der Vorrichtung und des Stempels hängen davon ab, wieviele Lichtwellenleiter verschmolzen werden sollen.
Es werden Lichtwellenleiter verwendet, deren optischer Mantel in dem zu verschmelzenden Bereich mechanisch oder chemisch entfernt wurde.
Geeignete Polymer-Lichtwellenleiter haben einen Durchmesser von 0,1 bis 3, vorzugsweise 0,5 bis 1 mm und einen Kern aus beispielsweise PMMA (Kernbrechungsindex n_{K} = 1,49), PS (n_{K} = 1,59) oder PC (n_{K} = 1,585).

Ein auf diese Art und Weise hergestellter Sternkoppler erweist sich mechanisch als äußerst robust mit guten optischen Übertragungseigenschaften.

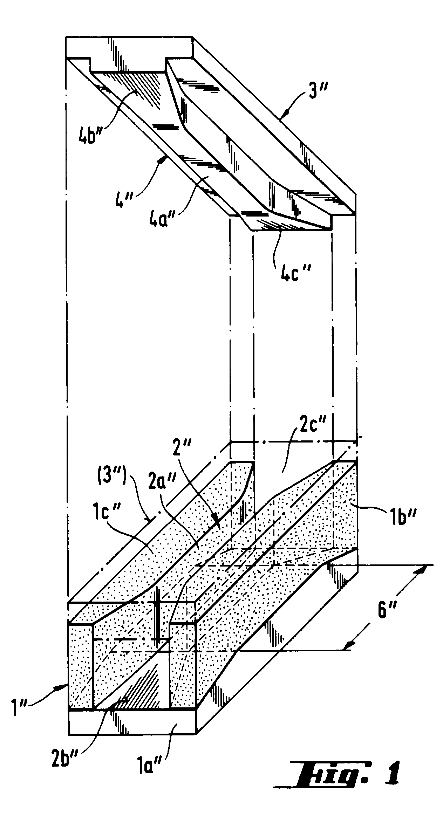

Figur 1 zeigt eine Möglichkeit der Gestaltung der Vorrichtung, die insbesondere die Beheizung der Vorrichtung erleichtert. Das Unterteil (1'') besteht nicht aus einem Stück, sondern aus einer Bodenplatte (1a'') aus Metall und zwei Seitenplatten (1b'') und (1c'') aus einem elektrisch isolierenden, wärmefesten Material, beispielsweise Glas oder Keramik. Bodenplatte (1a'') und Oberteil (3'') mit Stempel (4") bilden die Elektroden zu einem Kondensator, an welchen eine Wechselspannung angelegt werden kann. Das zwischen den Elektroden wirkende hochfrequente elektrische Wechselfeld regt die molekularen Dipole zu mit dem Wechselfeld synchronen Schwingungen an (beispielsweise 27,12 MHz). Hierbei entsteht eine molekulare Reibung, die die Polymeren von innen heraus erwärmt. Das Werkzeug bleibt dabei kalt, da für den ganzen Vorgang weniger als 10 s Zeit benötigt wird. Der schweißgepreßte Kunststoff kann sofort nach dem Öffnen der Vorrichtung entnommen werden.

### Beispiel 1

### Herstellung eines 8 x 8 Sternkopplers.

Acht 50 cm lange Polymer-Lichtwellenleiter aus PMMA mit einem Durchmesser von 1 mm wurden jeweils zu viert nebeneinander in eine Form gelegt, deren Unterseite eine Platte eines Kondensators bildete. Die Seitenwände der Form bestanden aus Glasplättchen.
Ein Metall-Stempel bildete die obere Platte des Kondensators. Der optische Mantel der PMMA-Fasern wurde vorher in der Mitte der Faser auf einer Strecke von 5 cm chemisch entfernt.
Mit einem Stempel wurde anschließend ein Druck von etwa 15 kg/cm auf die Fasern ausgeübt, und das angelegte hochfrequente elektrische Wechselfeld bewirkte innerhalb von 5 s in den PMMA-Fasern eine Wärmeentwicklung, so daß unter dem Druck die Lichtwellenleiter zu einem homogenen Mischstab verschmolzen. Das Preßwerkzeug blieb dabei kalt, und der Koppler konnte nach Öffnen der Form direkt entnommen werden.
Der gesamte Vorgang dauerte etwa 20 Sekunden.
Anschließend wurde der Mischbereich des 8x8-Sternkopplers mit einem Polysiloxan-Hartlack lackiert. Der Brechungsindex des Lackes ist mit n = 1,43 niedriger als derjenige des Fasermaterials mit n = 1,49. Die Lackschicht wirkt damit als totalreflektierender optischer Mantel. Der Einfügeverlust des 8x8-Sternkopplers bertrug 12 dB mit einer maximalen Leistungsschwankung zwischen den Ausgangsfasern von 2,3 dB.

## Patentansprüche

1. Verfahren zur Herstellung eines Sternkopplers aus Polymer-Lichtwellenleitern durch gleichsinniges Ordnen und Bündeln der Lichtwellenleiter und Verbinden derselben durch Wärme und Druck, dadurch gekennzeichnet, daß die an der Verbindungsstelle vom Mantel befreiten Lichtwellenleiter parallel in eine der späteren Form des Sternkopplers entsprechenden Rinne im Mittelbereich einer Vorrichtung gelegt werden, wobei die Vorrichtung aus einem Unterteil (1'') und einem Oberteil (3'') besteht, wobei das Unterteil (1'') aus einer Bodenplatte (1a'') aus Metall und zwei Seitenwänden (1b'' und 1c'') aus einem elektrisch nicht leitenden wärmefesten Material besteht, und die Seitenwände (1b'' und 1c'') eine Rinne (2'') mit zwei konischen Seitenabschnitten (2b") und (2c'') bilden, wobei das Oberteil (3'') mit einem Stempel (4'') aus Metall versehen ist, der aus einem parallelen Mittelabschnitt (4a'') und zwei konischen Seitenabschnitten (4b'' und 4c'') zusammengesetzt ist und in seiner Form der Rinne (2'') entspricht wobei das Verfahren weiterhin dadurch gekennzeichnet wird, daß die Polymer-Lichtwellenleiter durch Anlegen einer Wechselspannung an die Bodenplatte (1a'') und das Oberteil (3'') verschmolzen werden und daß anschließend die Verbindungsstelle der verschmolzenen Lichtwellenleiter mit einem Material, dessen Brechungsindex niedriger als der des Lichtwellenleitermaterials ist, optisch isolierend beschichtet wird.

## Claims

1. A method of producing a star coupler from polymer optical waveguides by co-directional ordering and clustering of the optical waveguides and bonding of the same by heat and pressure, wherein the optical waveguides freed of cladding at the bonding point are laid in parallel in a channel in the middle region of an apparatus, which channel corresponds to the later shape of the star coupler, the apparatus comprising a lower part (1'') and an upper part (3''), the lower part (1'') comprising a bottom plate (1a'') of metal and two side walls (1b'' and 1c'') of an electrically non-conducting heat-resistant material, and the side walls (1b'' and 1c'') forming a channel (2'') having two conical side sections (2b'') and (2c''), the upper part (3'') being provided with a die (4'') of metal which is made up of a parallel middle section (4a'') and two conical side sections (4b'' and 4c'') and corresponds in its shape to the channel (2''), the method further comprising the feature wherein the polymer optical waveguides are fused by applying an alternating voltage to the bottom plate (1a'') and the upper part (3'') and wherein subsequently the bonding point of the fused optical waveguides is coated in an optically insulating manner by a material whose refractive index is lower than that of the optical waveguide material.

## Revendications

1. Procédé pour la fabrication d'un coupleur étoile de fibres optiques polymères par dressage de même sens et disposition en faisceau des fibres optiques et par raccordement de ces dernières par chaleur et pression, caractérisé en ce que les fibres optiques libérées d'une enveloppe sur la zone de raccordement sont mises en parallèle dans un conduit correspondant à la forme ultérieure du coupleur étoile, dans une région centrale d'un dispositif comprenant une partie inférieure (1") et une partie supérieure (3"), la partie inférieure (1") ayant une plaque de base (1a") en métal et deux parois latérales (1b" et 1c") en matériau résistant à la chaleur, non électro-conducteur, et les parois latérales (1b" et 1c") forment un conduit (2") comportant deux parties latérales coniques (2b") et (2c"), la partie supérieure (3") étant munie d'une étampe en métal (4"), qui est composée d'une région centrale (4a") parallèle et de deux régions latérales (4b" et 4c") coniques et qui correspond, dans sa forme, au conduit (2"), le procédé étant, en outre, caractérisé en ce que les fibres optiques polymères sont fondues ensemble en appliquant une tension alternative sur la plaque de base (1a'') et sur la partie supérieure (3"), et en ce que, ensuite, la zone de raccordement des fibres optiques fondues est enduite, de façon à être isolée optiquement, avec un matériau dont l'indice de réfraction est plus bas que celui du matériau de fibre optique.
